Europäisches Patentamt

European Patent Office

Office européen des brevets

(11) Publication number: **0 182 952**
**B1**

# EUROPEAN PATENT SPECIFICATION

(45) Date of publication of patent specification: **28.06.89**

(51) Int. Cl.⁴: **F 02 M 21/02,** F 02 M 21/06

(21) Application number: **84830312.9**

(22) Date of filing: **17.11.84**

(54) Equipment suitable for feeding in internal combustion engine with air-l.p.g or air-methane mixture and device to regulate the strength of the mixture delivered by this equipment.

(43) Date of publication of application:
**04.06.86 Bulletin 86/23**

(45) Publication of the grant of the patent:
**28.06.89 Bulletin 89/26**

(84) Designated Contracting States:
**BE DE FR GB NL**

(56) References cited:
**EP-A-0 071 588**
**EP-A-0 077 286**
**DE-A-2 323 050**
**DE-A-3 044 744**
**GB-A-1 018 812**
**US-A-4 325 343**

(73) Proprietor: **B.B. BARBANTI BOLOGNA s.r.l.**
**Via del Lavoro, 81**
**I-40033 Casalecchio di Reno (IT)**

(72) Inventor: **Barbanti, Arturo, Ing.**
**Via del Lavoro, 81**
**I-40033 Casalecchio di Reno (Bologna) (IT)**

(74) Representative: **Rinaldi, Carlo**
**c.o. Studio Brevetti Nazionali ed Esteri dell'Ing.**
**Carlo Rinaldi & C. s.d.f. Piazza di Porta**
**Castiglione, 16**
**I-40136 Bologna (IT)**

Courier Press, Leamington Spa, England.

## Description

The invention relates to an equipment feeding an internal combustion engine, particularly for motor vehicles, with air-lpg, or air-methane mixture. In particular it relates to an equipment including a containing tank for fuel, connected through a piping with a first element suitable for controlling the pressure of the fuel-in gaseous form, electromechanical controlled devices surveying the gas passage toward a convenient area of the engine intake manifold, an electronical center unit controlling the above electromechanical devices in conformity with the rpm value of the engine and with the vacuum in said intake manifold and connection pipings between the said first element and said electromechanical devices.

In the field of lpg or methane carburation technics, it is necessary to use a pressure reducer in order to carry the fuel pressure from the tank value to a value next to the atmospheric one, to put it at the disposal of the mixer-carburetor.

Equipments of the above type, corresponding to the preamble of the first claim, are well known.

The devices forming the equipments of known type causes fuel evaporation in the reducer area called of first stage: that reduces the exactness in the fuel metering, because it creates pulsating effects with casual frequency in the area of the first stage.

Another fault in the current technics is to send the fuel gas to an upstream zone of the mixer-carburetor or in a bore made in the venturi of said mixer-carburetor, and that creates a trouble on the setting of it, a trouble that becomes evident when the engine works with gasoline.

In DE—A—2 323 050 an adjusting device particularly for a feeding system with a gaseous fuel for an internal combustion engine is disclosed.

Said adjusting device comprises essentially a casing connected with a fuel tank and with a mixer via, respectively, an inlet and an outlet conduit.

A valve body is placed between said inlet and outlet conduit, said valve body having a closing seat and being operated by a diaphragm device consisting essentially of a first diaphragm and of two chambers divided by said first diaphragm. The first one of said two chambers is connected, via a nominal pressure gas conduit, with a narrow zone of a venturi placed in said outlet conduit; said first chamber is also connected with the outlet conduit via a second conduit having an adjustable throttling.

A spring is arranged in the second one of said two chambers; said spring acting on said first diaphragm with a force which is proportional to the shifting of said diaphragm from its stopping position.

Said spring is connected with a second diaphragm which divides the second one from a third chamber in turn connected via a channel with an intake conduit.

A spring is placed in said third chamber whose load on said second diaphragm is adjustable by screwing a casing on a ring nut. Said spring biases said second diaphragm with a load less than the force which occurs on the surface of the second diaphragm during the engine idling functioning.

Finally said inlet and outlet conduit are connected via a by-pass with the valve body.

An adjustable throttling is arranged in said by-pass to determine the idle gas flow.

Said device presents in addition to the above mentioned disadvantages, the disadvantage of entrusting a venturi with the adjusting of the gas flow during the engine partial and full power phases; the venturi being an high delicate instrument when the motion of the fluid which crosses it is a stationary motion but it suffers notably the transition phases from a flow amount to an other one; in said phases the meterings are not reliable.

Besides, said venturi is connected with the mixer via a channel which opens in the spray-nozzle of the same mixer; said channel must open in the spray nozzle to not to suffer sensibly the pulsations which occur in the intake conduit downstream the throttle which could make the gas fuel not stationary through the outlet conduit. Further, the spring connection between the two diaphragms renders the adjusting device a device functioning in two phases; in the first phase (idle phase) the second diaphragm lies completely down on the upstream wall of its own casing, thus allowing the valve body to close its own seat to entrust the by-pass with the gas flow.

In the second phase (partial and full power phase) the second diaphragm lies down on the downstream wall of its own casing and acts as a fix plane for the first spring thus the gas flow is adjusted by the vacuum existing in the spray nozzle amplified by a vacuum signal occurring in the venturi and which acts on the first diaphragm to move the valve body.

EP—A—77 286 discloses an electronic injection vaporizer for a L.P.G. engine which comprises a deliverying device for gas warmed by the water coming from the cooling system; said deliverying system being able to deliver to the engine intake conduit electronically controlled gas amounts.

The vaporizer comprises a delivery chamber connected with a L.P.G. tank and with a channel in turn connected with the intake conduit; said vaporizer further comprises means adapted to allow a gas flow depending on the vacuum existing in the intake conduit.

There are few analogies with the present device.

DE—A—3 044 744 discloses a L.P.G. feeding system for an internal combustion engine with an adjusting device fitted with one or more electrical heating elements placed in the adjusting device near a main adjusting valve.

This patent does not specify how said heating elements are electrically fed and protected against possible short circuits.

Another fault of the known developed technics is to send gas to the intake conduit up or downstream the throttle valve after the metering of the gas by an electronical controlled center unit which receives information about the flow of the air sucked in by the engine through known means, as thermic wires, propellers rotated by the same air or similar devices; that involves expensive and also not completely reliable installations.

The present invention is intended to remedy these disadvantages. The invention, as it is characterized in the claims, solves the problem of feeding an internal combustion engine with air-gas fuel mixture, by using devices which do not change the carburetor strengths relatively to its original function of supplying air-fuel mixture for the engine.

Another object of the invention is to create an equipment of the mentioned type, including a device able to adjust the air-fuel mixture strength during all phases of the engine employment and that is: cranking and warm up phases; idling phase; transition phase; low and middle partial power phase and full power phase.

The advantages obtained by this invention essentially consist in the fact that the flow amount of the fuel gaseous phase is co-operatively adjusted by elements responsive to the vacuum existing in the intake manifold and by one or more electromechanical devices, whose opening frequencies depend on the rpm value of the engine, as it is not necessary the openings timing of said electromechanical devices in comparison with the openings of the suction valves, therefore the equipment, according to the present invention, adjusts the flow amount of fuel by considering the load applied to the engine, expressed by said vacuum, and the rpm value of the engine.

The invention will be described below by referring to the drawings which represent one not limiting embodiment:

Figure 1 represents a pressure reducer, sectioned according to a vertical symmetry plane, being a part of the equipment in accordance with the invention,

Figure 2 represents a detail of Figure 1 in a partial section view.

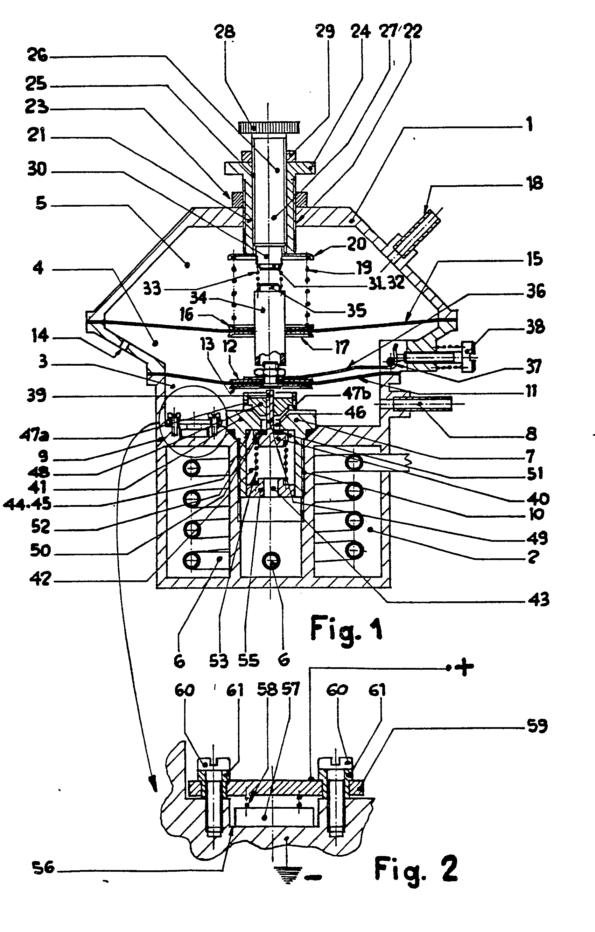

The reducer of Figure 1 is a part of an equipment, not represented, through which an air-fuel mixture at the gaseous-form feeding an internal combustion engine is formed; this reducer is one of the devices through which the equipment adjusts the mixture strength as a function of the engine working state; other devices for the strength adjustment being composed of electromagnetical controlled injection valves actuated by a known device able to energize their winding, as a function of the rpm value and of the other engine functioning parameters such as the vacuum in the manifold, the air flow in the feeding circuit etc. detected by known devices suitable for receiving information about the rpm value the vacuum and the air flow, for example by the ignition distributor; the equipment includes also an air suction conduit, in which a throttle valve is placed, in a known way. Said device, able to energize said winding, being, for example, constitued by a known central unit.

The reducer of Figure 1 consists of a housing 1, which contains a first cavity 2, a second cavity 3, a third cavity 4 and a fourth cavity 5, hermetically divided among them.

The first cavity 2 houses a coil 6, connected with the tank, not represented, to receive from said tank fuel at the liquid form through a known type of piping, not represented; fuel evaporation occurs in the coil 6; the heat necessary for this change of state is given by a suitable amount of cooling water which crosses in a known manner, the first cavity 2. When the engine has not yet reached a sufficiently high thermal level, said heat is supplied by a certain number of positive thermal control resistors, shown in Figure 2 and which will be better described below.

Coil 6 ends with a valve 7, whose details will be later described, suitable for checking the flow amount of the fuel at the vapour-form and to send it towards the second cavity 3, from which it goes out in order to be at the disposal of the injection valves through a piping, not represented, but joined to cavity 3 through a coupling to a small connection tube 8.

Said cavities 2 and 3 are divided between them by a metal wall 9 equipped, in the central part thereof, with a hole 10, crossed by valve 7; known sealing means, not represented, being present to retain water in cavity 2.

Cavity 3 is divided from cavity 4 by an elastic and gas-proof diaphragm 11, stiffened in the central part thereof by a first pair of plates 12 and 13.

Cavity 4 communicates with the atmosphere through an opening 14 of proper sizes, such that the atmospheric pressure in said cavity 4 is maintained constant.

Cavities 4 and 5 are divided by an elastic and gas-proof diaphragm 15, stiffened in the central part thereof, by a second pair of plates 16 and 17. Cavity 5 is connected, through a piping, not represented, introduced into a small connection tube 18, with the part of the suction conduit downstream the throttle valve, to submit said diaphragm 15 to the vacuum action existing in this part of the conduit; said vacuum, together with the rpm value of the engine, is a fundamental parameter to represent the working state of the engine; if the vacuum is low, that means that the throttle is completely open and the engine works under a high load; if the vacuum is high, that means that the throttle is relatively closed and that the engine works under a modest or null load.

To amplify the vacuum signal inside cavity 5, diaphragm 15 has suitable sizes, and in particular, has a diameter sensibly higher than the one of diaphragm 11; that allows up- and downstream translation of diaphragm 15 even for little vacuum variations.

In order to oppose the vacuum action on diaphragm 15, a spring 19 is set between plate 17 and a plate 20 integral with a bushing 21, outwardly threaded to be screwed into a hole 22, also threaded, made in the upper part of housing 1; a nut 23 is screwed to the outward thread of the bushing 21 to fix its position in comparison with hole 22; bushing 21 presents a first operating element 24, by which the same bushing 21 is turned when nut 23 is not tight, to range it correctly relatively to hole 22; by turning bushing 21, the load of spring 19 changes in order to obtain a first adjustment of this device, which allows to obtain correct mixture strengths during the middle and high power phases and the full power phase of the engine.

A threaded hole 25 is present in bushing 21 to house an adjusting element 26, including a first threaded part 27, fitted for co-operation with the thread of hole 25 to adjust the position of element 26 in comprison with bushing 21, said first part 27 presenting, in the upper part thereof, a second operating element 28, for element 26; a nut 29 is suitable for fixing the position of element 26 in comparison with bushing 21. Element 26 presents also a cylindrical hub 30 with a diameter smaller than the diameter of hole 25 and whose downstream end 31 is integral with a housing 32 able to support the upstream end of a spring 33 placed between housing 32 and a rigid tubular element 34 integral with plates 16 and 17 and suitable for acting on plate 12. A cylindrical hub 35 integral with the small tube 34 is present to prevent the disjunction of spring 33, which has a relatively high stiffness.

By acting on the operating element 28 when nut 29 is disengaged, the load of spring 32 is changed to obtain a second adjustment of said device and that in order to have a correct mixture metering during the transition phase.

A leaf spring 36 biases plate 13; said spring 36 rotates on a pin 37, integral with the body of housing 1; the load of spring 36 is adjustable by an adjusting screw 38, to maintain plate 13 in contact with an end 39 of a valve element 40, being part of valve 7.

By acting on spring 36 through the adjusting screw 38, it is possible to obtain a correct mixture metering in the engine idling phase.

Valve 7 consists of a bushing 41 outwardly threaded to be screwed on the upstream end of pipe coil 6; bushing 41 presents a cavity 42, communicating through a hole 43 with coil 6 and a wall 44 having an internal plane surface 45, which limits the upper part of cavity 42; wall 44 presents a middle hole 46 connecting cavity 42 with four radial passages, of which passages 47a and 47b are shown in Figure 1.

The upper part of the valve element 40 is closed by a truncated cone element 48, having a hole in the centre to house a rod 49, forming part of said valve element 40.

Rod 49 integrally bears, in the downstream part thereof, a cylindrical element 50, presenting a ring-shaped notch 51, and suitable for housing a ring-shaped sealing element 52, to close hole 46 under the action of a spring 53, placed between element 50 and hub 55, in which said hole 43 has been made, and under the action of the pressure of the fuel in gaseous form; therefor spring 53 acts against the opening action of plate 12 to end 39 during the various phases of the engine employment.

In order to warm the vapour up in cavity 3 and to allow the complete fuel evaporation during the warm up phase of the engine, wall 9 includes an arcuated notch 56, suitable for housing a predetermined number of positive thermal control electrical resistors (P.T.C.), one of which is represented in Figure 2.

A P.T.C. puck 57 is housed in notch 56 and maintained adherent to the lower surface thereof by a spring 58 placed between the upper surface of puck 56 and the lower surface of a metal plate 59, fixed on the upper surface of wall 9 through screws 60; bushings of electrically insulating material 61 are placed around screws 60 for electrical insulation thereof from wall 9.

The electrical network feeding pucks 57 includes metal plate 59, connected with a current generator (+), spring 58 and the same puck 57, earthed (−) through the body of reducer.

We will now disclose the functioning of the device in view of what have been described and shown and by referring to said four phases of the engine employment.

During the engine warm up phase, the heat necessary to completely evaporate the fuel in cavity 3 is partially supplied by (P.T.C.) pucks 57 which deliver, due to Joule effect a heat quantity which decreases when the temperature, to which they are submitted, increases.

Pucks 57 are chosen in number and size to supply a heat quantity sufficient to evaporate the fuel necessary for the engine working when the gas temperature in cavity 2 is below a first determined value; as the engine temperature increases, the heat coming from the cooling water increases and as a consequence the current through pucks 57 decreases till it becomes minimum for a second determined temperature value of the cooling water; value which is close to the engine running temperature.

During the idling phase, the flow amount of fuel necessary for a correct feeding mixture strength is given to thrust of spring 36 on plates 12 and 13, which, in turn, transmit the above thrust to end 39 of valve element 40, to shift it towards the bottom of a such quantity to allow the desired flow amount of fuel through hole 46.

During the transition phase, the vacuum in the intake manifold and then in cavity 5 lowers, even if it lowers little, in comparison with the idling phase.

Diaphragm 15 shifts towards the bottom and allows the tubular element 34 to bias plates 13 and 12 in the same direction under the thrust of spring 19, and it starts from a position determined by the load of spring 33.

As a consequence, the lowering of valve element 40 allows a greater outlet opening between cylindrical element 50 and hole 46, increasing the flow amount of fuel according to the needs imposed by the increase of the load applied to the engine.

During the full power phase, the vacuum in cavity 5 furtherly lowers, and that allows a greater lowering of diaphragm 15 under the thrust of spring 19 and consequently a greater lowering of plates 13 and 12 biased by elongated element 34. A further lowering of valve element 40 is achieved whose cylindrical element 50 moves furtherly away from hole 46 to increase the outlet opening and adjust the fuel flow to the amount of air sucked by the engine.

During a release phase tubular element 34 is moved upward by the vacuum acting on diaphragm 15 whereas the positions of plates 12 and 13 is adjusted by spring 36.

## Claims

1. Equipment suitable for feeding an internal combustion engine with air-L.P.G. or air-methane mixture and device to adjust the air fuel ratio of the mixture delivered by this equipment comprising at least: a fuel tank; a pressure reducer connected with said tank via a first conduit; an intake conduit to feed an internal combustion engine having a throttle valve which divides said intake conduit into an upstream and a downstream part; electromechanical injectors placed in said upstream or in said downstream part and connected with said reducer via a second conduit; an electronic central unit having an input connected at least with a first rpm sensor and with a second vacuum sensor for the vacuum existing in said downstream part of said intake and with an output connected with said injectors to control the fuel flow through said injectors; characterised by said reducer comprising: a first cavity (2) adapted to house a coil (6) whose upstream end is connected with said tank; said coil (6) receiving heat from the engine cooling water which reaches said first cavity (2) from the engine cooling system; a second cavity (3) divided from said first cavity (2) by a first metal wall (9); said second cavity (3) being connected with said electromechanical injectors via said second conduit; said wall (9) having a hole (10) to house a valve (7) placed at the downstream end of said coil (6); a third cavity (4) divided from said second cavity (3) by a first diaphragm (11) fitted with first plates (12, 13) and communicating with the atmosphere via an opening (14); a fourth cavity (5) which divides said third cavity (4) by a second diaphragm (15) fitted with second plates (16, 17); said fourth cavity (5) communicating with said downstream part of said intake conduit via a third conduit joined to a small pipe (18); a first spring (19) placed within said fourth cavity (5) between one of said second plates (16) and a plate (20) integral with an element (21) suitable for sliding within said fourth cavity (5) to locate said plate (20) with respect to said one of said second plates (16); said reducer comprising further; a rigid tubular element (34) integral with said second plates (16, 17) able to act on said first plates (12, 13) to transmit the movements of said second diaphragm (15) tending to increase the volume of said fourth cavity (5) to said first diaphragm (11) and to allow said first plates (12, 13) to open said valve (7); a first elastic adjusting element (36, 38) being present to adjust the distance between one of said first plates (13) and said valve (7) when the vacuum in said fourth cavity (5) is the engine idle vacuum, said wall (9) having a notch (56) for housing a predetermined number of positive thermal control electrical resistors (57).

2. Equipment as in claim 1 characterized by the fact that said second diaphragm (15) has a surface greater than said first diaphragm (11).

3. Equipment as in claim 1 characterized by the fact that to feed said electrical resistors (57) housed in said notch (56) there are provided; a metal plate (59) connected with the positive pole of a current generator; metallic springs disposed between said plate (59) and said electrical resistors (57); said metal plate (59) being fixed to said wall (9) via screws (60) insulated by bushings (61) of insulating material; said wall (9) being earthed.

4. Equipment as in claim 1 characterized by the fact that said first elastic adjusting element includes a leaf spring (36) whose end acts on said plate (13); said spring (36) being pivoted on a pin (37) integral with the body of housing (1); an adjusting screw (38) is able to adjust the load of said spring (36) to maintain said plate (13) in contact with an end (39) of a valve element (40) of said valve (7).

5. Equipment as in claim 1 characterized by the fact that a spring (33) is provided in said cavity (5) between an upstream end of said tubular element (34) and a downstream end of an adjusting element (26).

6. Equipment as in claim 1 characterized by the fact that said valve (7) consists of a bushing (41) inserted in a hole (10) made in said wall (9) and delimited upwardly and downwardly by a second wall (48) and by a hub (55); a hole (46) being made in said wall (48) and a hole (43) being provided in said hub (55); said hole (46) communicates with a predetermined number of passages (47a, 47b) made in said bushing (41) upstream said hole (46); said hole (43) communicates with said coil (6) to receive fuel; a valve element (40), consisting of a cylindric part (40) and of a rod (49), which is able to close said hole (46) under the action of a spring (42) placed between said hub (55) and said valve element (40) under the action of the pressure of the fuel in gaseous form; said plate (13) insisting on said end (39) under the action of a force given by said spring (36) or by said springs (19, 33) to open said hole (46).

## Patentansprüche

1. Luft-LPG oder Luft-Methan Gemischzuführvorrichtung für Brennkraftmaschine und Vorrichtung zur Einstellung des Mischungsverhältnisses mit wenigstens: einem Behälter für einen der obengenannten Brennstoffen; einem durch eine erste Brennstoffleitung mit dem Behälter verbundenen Druckreduzierer; einem Ansaugrohr zur Speisung der Brennkraftmaschine, welches eine Drosselklappe enthält, die das Ansaugrohr in einem ersten Teil, der sich stromauf der Drosselklappe befindet und in einem zweiten Teil, der sich stromab der Drosselklappe befindet, aufteilt; elektromechanisch angetriebenen Einspritzvorrichtungen, die sich in dem ersten oder in dem zweiten Teil des Ansaugrohres befinden, und die durch zweite Brennstoffleitungen mit dem Druckreduzierer verbunden sind; einer elektronischen Steuerungseinheit, die einen mit wenigstens einem ersten Sensor der Maschinedrehzahl und einem zweiten Sensor des in dem zweiten Teil des Ansaugrohres bestehenden Unterdruckes verbundenen Eintritt, sowie einen mit den Einspritzvorrichtungen verbundenen Zutritt aufweist, um die Zuführ des Brennstoffes durch die Einspritzvorrichtungen zu steuern, dadurch gekennzeichnet, daß der Druckreduzierer außerdem aufweist: einen ersten Hohlraum (2), der eine Schlang (6) enthält, deren obergestelltes Ende mit dem Behälter verbunden ist; wobei die Schlang (6) durch die Wärme des Kühlungswassers der Brennkraftmaschine erwärmt wird, das zum ersten Hohlraume (2) vom Kühlungssystem der Brennkraftmaschine auskommt; einen vom ersten Hohlraume (2) durch eine erste Metallwand (9) getrennten zweiten Hohlraum (3); wobei der zweite Hohlraum (3) mit den Einspritzvorrichtungen durch die zweiten Brennstoffleitungen verbunden ist; außerdem weist die erste Wand (9) eine Bohrung (10) auf, die eine Ventil (7) enthält, die sich im unterstehenden Ende der Schlang (6) befindet; einen vom zweiten Hohlraume (3) durch eine erste mit ersten Tellerchen (12, 13) versehene Membran (11) getrennten dritten Hohlraum (4), der mit der Atmosphäre durch eine Öffnung (14) verbunden ist; einen vom dritten Hohlraume (4) durch eine zweite mit zweiten Tellerchen (16, 17) versehene Membran (15) getrennten vierten Hohlraum (5), wobei der vierte Hohlraum (5) mit dem zweiten Teil des Ansaugrohres durch eine in einem Röhrchen (18) eingeschaltete dritte Leitung verbunden ist; einer Feder (19), die sich innerhalb des vierten Hohlraums (5) zwischen einem der zweiten Tellerchen (16) und einem Tellerchen (20) befindet, wobei das Tellerchen (20) mit einem Bestandteil (21) fest verbunden ist, der so geeignet ist, daß er innerhalb des vierten Hohlraums (5) gleitet, um das Tellerchen (20) hinsichtlich eines der Tellerchen (16) in eine genaue Stellung zu stellen; außerdem enthält der Druckreduzierer: einen röhrenförmigen festen Bestandteil (34), der mit den zweiten Tellerchen (16, 17) fest verbunden ist, und der so geeignet ist, daß er auf den ersten Tellerchen (12, 13) wirkt, um die Bewegungen der zweiten Membran (15) an der ersten Membran (11) zu übertragen; diese Bewegungen neigen den Rauminhalt des vierten Hohlraums (5) so zu vergrößern, das die ersten Tellerchen (12, 13) die Ventil (7) öffnen; ein erstes elastisches Steuerungsglied (36, 38), das den Abstand zwischen einem der ersten Tellerchen (13) und der Ventil (7) steuert, falls der innerhalb des vierten Hohlraums (5) bestehende Unterdruck mit dem Unterdruck der Leerlauf der Maschine gleichwertig ist; überdies weist die Wand (9) eine Raste (56) auf, die eine vorausbestimmte Zahl von elektrischen Widerstanden (57) enthält, die einen positiven termischen Koeffizient bestizen.

2. Luft-LPG oder Luft-Methan Gemischzuführvorrichtung nach Anspruch 1, dadurch gekennzeichnet, daß die Flache der zweiten Membran (15) größer als die Flache der ersten Membran (11) ist.

3. Luft-LPG oder Luft-Methan Gemischzuführvorrichtung nach Anspruch 1, dadurch gekennzeichnet, daß, zur elektrischen Speisung der in der Raste (56) befindlichen Wiederstanden (57), vorgesehen sind: eine mit dem positiven Pol eines Stromerzeugers verbundene Metallplatte (59); zwischen der Metallplatte (59) und den Widerstande (57) eingestellten Metallfedern (58); wobei die Metallplatte (59) auf der Wand (9) durch Schrauben (60) fest verbunden ist und die Schrauben (60) durch aus Isolierstoff ergestelten Hülsen (61) isoliert werden; außerdem ist die Wand (9) geerdet.

4. Luft-LPG oder Luft-Methan Gemischzuführvorrichtung nach Anspruch 1, dadurch gekennzeichnet, daß das erste elastische Steuerungsglied (36, 38) eine Blattfeder (36) enthält, deren Ende am ersten Tellerchen (13) anliegt; die Blattfeder (36) dreht um einem Drehpunkt (37), der mit dem Körper eines Behälters (1) fest verbunden ist; wobei eine Einstellschraube (38) so geeignet ist, daß sie die Belastung der Blattfeder (36) einstellt, um den Kontakt zwischen dem ersten Tellerchen (13) und einer Spitze (39) eines der Ventil (7) gehörenden Ventilsbestandteils (40) zu erhalten.

5. Luft-LPG oder Luft-Methan Gemischzuführvorrichtung nach Anspruch 1, dadurch gekennzeichnet, daß innerhalb des vierten Hohlraums (5) eine Feder (33) vorgesehen ist; wobei die Feder (33) sich zwischen einem obergestellten Ende des röhrenförmigen Bestandteils (34) und einem untergestellten Ende eines Steuerungsglieds (26) befindet.

6. Luft-LPG oder Luft-Methan Gemischzuführvorrichtung nach Anspruch 1, dadurch gekennzeichnet, daß die Ventil (7) aus einer in einer Bohrung (41) eingefügten Hülse (41) besteht; wobei die Borhung (41) in der Wand (9) gebohrt ist und oberhalb, durch eine zweite Wand (48) und unterhalb, durch eine Nabe (56), begrenzt ist; eine Bohrung (46) ist in der zweiten Wand (48) gebohrt und eine Bohrung (43) befindet sich in der Nabe (56); die Bohrung (46) stehet in Verbindung mit einer vorausbestimmten Zahl von Übergängen (47a, 47b), die sich stromauf der Bohrung (46) in der Nabe (56) befinden; die Bohrung (43) steht in Verbindung mit der Sclang (6) um Brennstoff zu bekommen; außerdem besteht die Ventil (7) aus einem aus einem walzenförmigen Teil (40) und aus einer Stange (49) bestehenden Ventilsglied (40), das so geignet ist daß es die Bohrung (46) wegen der Wirkung einer zwischen der Nabe (56) und dem Ventilsglied (40) sich befindlichen Feder (42) und wegen des Druckes des gasformigen Brennstoffes schließt; wobei das erste Tellerchen (13) wegen einer durch die Blattfeder (36) oder durch die Federn (19, 33) verursachten Kraft am Ende (39) anliegt um die Bohrung (46) zu öffnen.

**Revendications**

1. Equipement adéquat pour l'alimentation en mélange air-GPL ou air-méthane d'un moteur à combustion interne et dispositif pour ajuster la richesse du mélange fourni par cet équipement, du type comprenant au moins: un réservoir à carburant; un réducteur de pression joint au réservoir par une première conduite; une tubulure d'admission pour l'alimentation du moteur, pourvue d'une vanne papillon, qui sépare la tubulure en une première partie, qui se trouve en amont de la vanne et en une deuxième partie, qui se trouve en aval de la vanne; soupapes d'injection susceptibles d'être actionnées électromagnétiquement, qui se trouvent dans la première ou dans la deuxième partie et qui sont jointes au réducteur par une deuxième tuyauterie; une centrale à composants électroniques avec un'entrée reliée au moins à un premier détecteur de régime de rotation du moteur et à un deuxième détecteur de la dépression dans la deuxième partie et avec une sortie reliée aux soupapes d'injection, pour contrôller le débit du carburant qui traverse les soupapes d'injection, caractérisé en ce que le réducteur comprend: une première chambre (2), adéquate pour contenir un serpentin (6), l'extrémité supérieure duquel est jointe au réservoir; le serpentin (6) reçoit chaleur de l'eau de refroidisse-.. ment du moteur, qui arrive dans la première chambre (2) du circuit de refroidissement du moteur; une deuxième chambre (3) separée de la première chambre (2) par une première paroi métallique (9); la deuxième chambre (3) est jointe aux soupapes d'injection par la deuxième tuyauterie; la paroi (9) a un trou (11), qui reçoit une soupape (7), qui se trouve à l'extrémité inferieure du serpentin (6); une troisième chambre (4), separée de la deuxième chambre (3) par un premier diaphragme (11), pourvue de premiers plateaux (12, 13), cette deuxième chambre (3) est jointe avec l'atmosphère par une ouverture (14); une quatrième chambre (5) separée de la troisième chambre (4) par un deuxième diaphragme (15), pourvu de deuxièmes plateaux (16, 17); la quatrième chambre (5) est jointe avec la première partie ou la deuxième partie de la tubulure d'admission par une troisième conduite, qui est clabotée à un tube (18); un premier ressort (19) placé dans la quatrième chambre (5) entre une des deuxièmes plateaux (16) et un plateau (20), qui est solidaire à un élément (21), adéquat pour glisser dans la quatrième chambre (5), pour disposer le plateau (20) par rapport à un des deuxièmes platoux (16); le réducteur comprend en outre: un élément tubulaire rigide (34), solidaire aux deuxièmes plateaux (16, 17), adéquat pour agir sur les premiers plateau (12, 13) pour transmettre 1 es mouvements du deuxième diaphragme (15), qui tendent à augmenter le volume de la quatrième chambre (5), au premier diaphragme (11) et pour permettre aux premiers plateaux (12, 13) d'ovrir la soupape (7); un premier élément de réglage elastique (36, 38) est pour ajuster la distance entre un des premiers plateaux (13) et la soupape (7), lorsque la dépression régnant dans la quatrième chambre (5) est égale à la dépression régnant dans la deuxième partie lorsque le moteur tourne au ralenti; la paroi (9) présente une fente (56) pour, contenir une pluralité de résistances électriques (57), qui ont un coefficient thermique positif.

2. Equipement suivant la revendication 1, caractérisé en ce que la surface du deuxième diaphragme (15) est plus grand que la surface du premier diaphragme (11).

3. Equipement suivant la revendication 1, caractérisé en ce que pour l'alimentation des résistances électriques (57) logées dans la fente (56) on a pourvu: une plaque métallique (59) reliée au pôle positif d'un générateur de courant; ressorts métalliques disposés entre la plaque métallique (59) et les résistances électriques (57); la plaque métallique (59) est fixée à la paroi (9) par des vis (60), qui sont isolées par des boucles (61) en matériel isolante; la paroi (9) est reliée à masse.

4. Equipement suivant la revendication 1, caractérisé en ce que le premier élément de réglage elastique (36, 38) comprend un ressort à lames (36), l'extrémité duquel insiste sur le plateau (13); le ressort à lames (36) a un pivot (37), qui est solidaire au corps d'un enveloppe (1); une vis de réglage (38) est adéquat pour ajuster le charge du ressort (36), pour maintenir le contact entre le plateau (13) et la pointe (39) d'un élément de soupape (40), qui appartient à la soupape (7).

5. Equipement suivant la revendication 1, caractérisé en ce que on a pourvu un ressort (33) disposé à l'intérieur de la chambre (5) entre un'extrémité supérieure de l'élément tubulaire (34) et un'extrémité inférieure d'un dispositif de réglage (26).

6. Equipement suivant la revendication 1, caractérisé en ce que la soupape (7) est constituée par une boucle (41) introduite dans un trou (10) fait dans la paroi (9) et délimité, dans la partie supérieure et dans la partie inférieure, par une deuxième paroi (48) et par un moyeu (55), respectivement; un percement (46) est pratiqué dans la paroi (48) et un percement (43) est présent dans le moyeu (55); le percement (46) est joint avec une pluralité de passages (47a, 47b), qui sont pratiqués dans la boucle (41) en amont du percement (46); le percement (43) est joint avec le serpentin (6), pour recevoir carburant; un element de soupape (40) constitué par une partie cylindrique (40) et par une tige (49), est adéquat pour la fermeture du percement (46) parce que actionnée d'un ressort (42), qui se trouve entre le moyeu (55) e l'élément de soupape (40), et par l'action de la pression du carburant en état gazeux; le plateau (13) insiste sur l'extrémité (39) par l'action d'une force fournie par le ressort (36) ou par les ressorts (19, 33), pour ouvrir le percement (46).

7

Fig. 1

Fig. 2